Europäisches Patentamt

European Patent Office

Office européen des brevets

(11) Veröffentlichungsnummer: **0 256 270**
**A2**

(12) **EUROPÄISCHE PATENTANMELDUNG**

(21) Anmeldenummer: **87109449.6**

(22) Anmeldetag: **01.07.87**

(51) Int. Cl.³: **G 11 B 5/105**
**//G11B5/53**

(30) Priorität: **02.08.86 DE 3626274**

(43) Veröffentlichungstag der Anmeldung:
**24.02.88 Patentblatt 88/8**

(84) Benannte Vertragsstaaten:
**AT DE FR GB IT**

(71) Anmelder: GRUNDIG E.M.V. Elektro-Mechanische
Versuchsanstalt Max Grundig holländ. Stiftung & Co. KG.
Kurgartenstrasse 37
D-8510 Fürth(DE)

(72) Erfinder: Gukkenberger, Horst, Dipl.-Ing. Grundig E.M.V.
Max Grundig holländ Stiftung&Co KG KurgartenStr.37
D-8510 Fürth/Bay(DE)

(72) Erfinder: Eberle, Karl, Dipl.-Ing Grundig E.M.V.
Max Grundig holländ Stiftung&Co KG KurgartenStr.37
D-8510 Fürth/Bay(DE)

(72) Erfinder: Köpnick, Klaus Jürgen, Dipl.-Ing Grundig
E.M.V.
Max Grundig holländ Stiftung&Co KG KurgartenStr.37
D-8510 Fürth/Bay(DE)

(54) Verfahren zum Verbinden eines Magnetkopfkernes mit einer Montageplatine.

(57) Beschrieben ist ein Verfahren zum Verbinden eines Magnetkopfkernes mit einer Montageplatine, wobei der Magnetkopfkern aus Ferrit besteht und von einem vorgeformten Kernblock abgetrennt ist. Vor dem Abtrennen wird der Kernblock jedoch mit einem Metallblock verlötet und der Magnetkopfkern wird sodann gemeinsam mit der Montageplatine aus dem Gesamtblock abgetrennt.

Fig. 1

EP 0 256 270 A2

1

# VERFAHREN ZUM VERBINDEN EINES MAGNETKOPFKERNES MIT EINER MONTAGEPLATINE

## BESCHREIBUNG

Die Erfindung betrifft ein Verfahren zum Verbinden
eines Magnetkopfkernes mit einer Montageplatine zu
einer Video-Magnetkopfeinheit, wobei der Kern des
Magnetkopfes aus Ferrit besteht und aus einem
vorgeformten Kernblock abgetrennt ist. Es ist bekannt,
daß der Magnetkern eines Video-Magnetkopfes aus zwei
verbundenen, einen unmagnetischen Arbeitsspalt
aufweisenden Kernhälften besteht. Durch
scheibchenweises Abtrennen von einem vorgeformten
und vorgefertigten Kernblock wird in bekannter Weise
der einzelne sehr dünne Magnetkern hergestellt. Nach
dem Schleifen der Kopfspiegelfläche (Bandlauffläche)
und nach dem Bewickeln wenigstens eines Joches des

- 2 -

Magnetkernes ist im wesentlichen der Video-Magnetkopf fertiggestellt. Dieser so gefertigte Magnetkopf wird auf eine Montageplatine aufgeklebt. Eine komplette Magnetkopfeinheit dieser Art besteht somit aus einer Montageplatine mit aufgeklebtem Magnetkopf. Diese Kopfeinheit wird an einer vorgegebenen Stelle auf einem Kopfrad aufgeschraubt und nach dem Einbau des Kopfrades in eine Kopftrommel eines Video-Magnetbandgerätes wird der Videokopf durch Justage in die erforderliche Höhen-Bandlage gebracht. Nachteilig ist bei einer Magnetkopfeinheit der geschilderten Art, daß die getrennte Bearbeitung des Magnetkerns und der Montageplatine sowie das zusätzliche Verkleben beider Teile einen erheblichen Aufwand darstellt.

Aufgabe der Erfindung ist es daher, eine Magnetkopfeinheit, bestehend aus einem Video-Magnetkopf und einer Montage-Platine zu schaffen, bei der die teils sehr dünnen Kernteile und die Montageplatine möglichst aus einem Gesamtblock gebildet und in einem Arbeitsgang herzustellen sind.

Diese Aufgabe wird erfindungsgemäß durch die kennzeichnenden Merkmale des Patentanspruchs 1 gelöst.

Einzelheiten der Erfindung werden im folgenden anhand der Zeichnungen erläutert.

Fig. 1     ist eine perspektivische Darstellung
           eines Magnetkopfkernes mit einer
           verbundenen Montageplatine, die von
           einem Gesamtblock abgetrennt sind,

Fig. 2     ist eine Darstellung eines
           Magnetkopfkernes mit Montageplatine
           ähnlich der Fig. 1, jedoch mit einer
           galvanisch aufgebrachten
           Zwischenschicht,

Fig. 3     ist eine Darstellung eines
           Magnetkopfkernes mit Montageplatine
           ähnlich der Fig. 2, jedoch mit
           galvanisch aufgebauter Montageplatine.

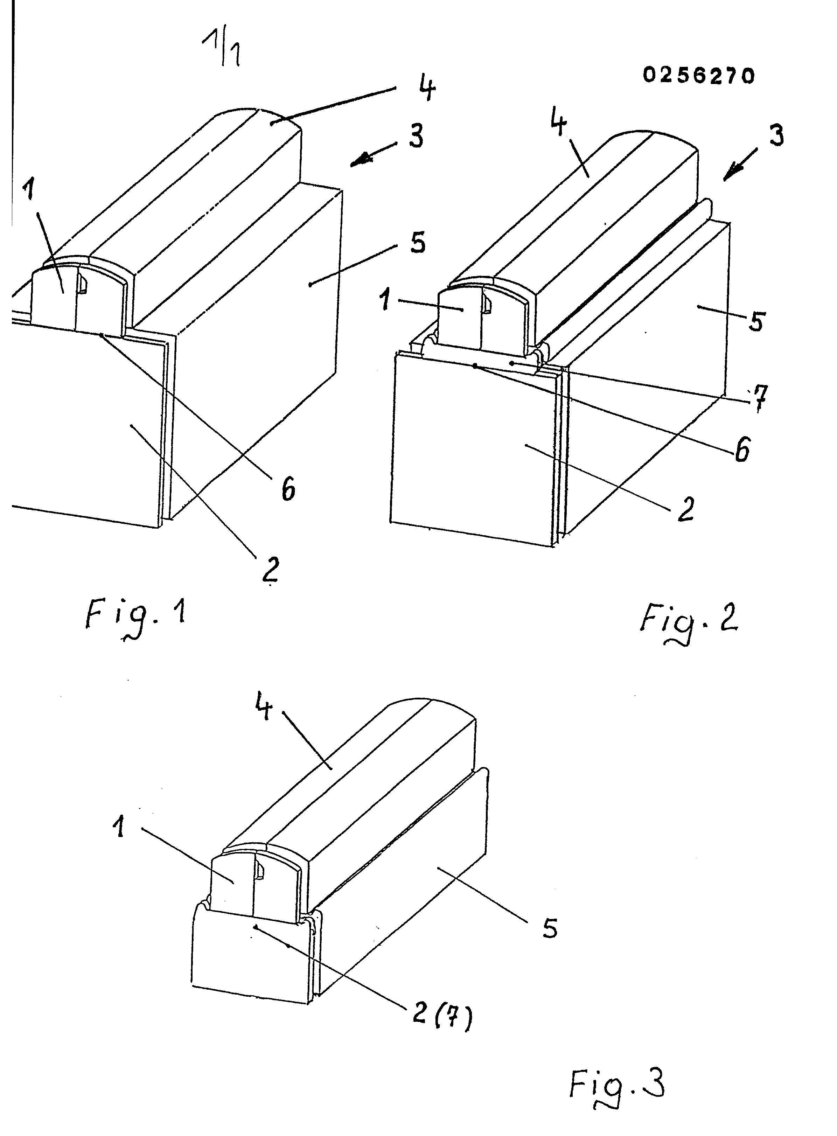

Die Figur 1 zeigt in perspektivischer Darstellung einen
Magnetkern 1 mit Montageplatine 2, wobei die beiden
verbundenen Teile gemeinsam von einem Gesamtblock 3
z. B. durch Trennschleifen abgetrennt sind. Der
Gesamtblock 3 besteht aus einem vorgeformten Kernblock 4
und aus einem Metallblock 5. Der Kernblock ist aus zwei
Kernblockhälften gebildet. Der Kernblock 4 und der
Metallblock 5 sind vorzugsweise mittels Glaslot 6 oder
Metallot zusammengelötet. Aus dem so verbundenen
Gesamtblock 3 können die verbundenen Teile in
beliebiger Stückzahl abgetrennt werden und weisen

- 4

bereits die gewünschte Kern- bzw. Platinenstärke auf. Zur Verbesserung der Lötbarkeit beider Blockteile ist vorzugsweise zwischen dem Kernblock 1 und dem Glaslot 6 eine Haftschicht auf der Kernblockseite aufgebracht. Die Haftschicht, die z. B. aus Cr, Ag, Ti, $TiO_2$ oder CrO besteht, wird aufgedampft oder aufgesputtert. Die Haftschicht dient der besseren Verbindung zwischen dem Kernblock 4 aus Ferrit und dem Glaslot 6.

Aus der Figur 2 ist ersichtlich, wie die Verbindung zwischen der Haftschicht und dem Glaslot 6 durch eine zusätzlich galvanisch aufgebaute Metallschicht 7 verstärkt wird. Die Haftfläche vom Kernblock 4 zum Metallblock und somit vom Magnetkern 1 zur Montageplatine 2 wird hierdurch vergrößert und erhöht die Festigkeit der Lötverbindung. Eine Erweiterung der galvanisch aufgebauten Metallschicht 7 führt nach Figur 3 zur Bildung eines mit dem Kernblock 4 verbundenen Metallblocks 5. Hierdurch entfällt die Lötverbindung mittels Glaslot, doch ist der technische Aufwand nicht unerheblich. Die für die Fertigstellung des Magnetkopfes erforderliche Drahtwicklung wird zuletzt in Form einer wenigstens um eine Kernhälfte gewickelten Spule aufgebracht.

# VERFAHREN ZUM VERBINDEN EINES MAGNETKOPFKERNES MIT EINER MONTAGEPLATINE

## PATENTANSPRÜCHE

1. Verfahren zum Verbinden eines Magnetkopfkernes mit einer Montageplatine zu einer Video-Magnetkopfeinheit, wobei der Kern des Magnetkopfes aus Ferrit besteht und aus einem vorgeformten Kernblock abgetrennt ist, d a d u r c h   g e k e n n z e i c h n e t ,   daß der Kernblock (4) auf der kopfspiegelabgewandten Seite mit einem Metallblock (5) mittels schmelzbarem Lot, z. B. Glaslot oder Metallot zu einem Gesamtblock (3) verbunden ist, oder daß der Metallblock (5) mittels galvanischem Metallauftrag gebildet wird, daß aus dem Gesamtblock ein Magnetkern (1) mit einstückig verbundener Montageplatine (2) gemeinsam abgetrennt wird, und daß der Kern wenigstens mit einer Drahtspule bewickelt ist.

2

2. Verfahren nach Anspruch 1, dadurch gekennzeichnet, daß zwischen Kernblock (4), Glaslot (6) und Metallblock (5) eine Haftschicht auf der Kernblockseite und/oder auf der Metallblockseite aufgebracht ist.

3. Verfahren nach den Ansprüchen 1 und 2, dadurch gekennzeichnet, daß die Haftschicht vorzugsweise aus Ti, Cr, Ag, $TiO_2$, CrO besteht und insbesondere aufgedampft oder aufgesputtert ist.

4. Verfahren nach einem der bisherigen Ansprüche, dadurch gekennzeichnet, daß die Haftschicht durch eine galvanisch aufgebrachte Metallschicht (7) verstärkt ist.

5. Verfahren nach einem der bisherigen Ansprüche, dadurch gekennzeichnet, daß die galvanisch erzeugte Metallschicht derart auf dem Kernblock (4) aufgebaut wird, daß ein mit dem Kernblock verbundener Metallblock (5) gebildet ist.

0256270

Fig. 1

Fig. 2

Fig. 3